# EUROPEAN PATENT SPECIFICATION

(11) **EP 2 757 653 B1**
(45) Date of publication and mention of the grant of the patent: **28.06.2017**
(21) Application number: 13382012.6
(22) Date of filing: 17.01.2013
(51) Int. Cl.: H02J 7/00

(54) **Electronic device suitable for managing the direction of current and battery made up of modules which incorporate said device**
Elektronisches Gerät geeignet für die Verwaltung des Stromrichtung und Batterie gebaut mit Modulen die dieses Gerät verwenden
Dispositif électronique commandant la direction du courant et batterie constituée de modules incorporant ce dispositif

(43) Date of publication of application: 23.07.2014
(73) Proprietor: Fico Triad, S.A., 08232 Viladecavalls (ES)
(72) Inventor: Romeral Martinez, José Luis, E-08242 Manresa (Barcelona) (ES); Castellà Rodil, Marc, E-08242 Manresa (Barcelona) (ES)
(74) Representative: ABG Patentes, S.L.

(56) References cited:
- DE-A1-102010 037 094
- US-A1- 2009 167 244
- US-A1- 2011 267 005
- US-A1- 2011 285 352
- US-A1- 2012 074 907
- US-A1- 2012 086 390

## Description

### Object of the Invention

The object of the invention is comprised in the field of managing charge in energy storage systems, such as cell packs forming batteries used in electric and hybrid vehicles.

### Background of the Invention

Electric energy storage batteries have a number of problems during their service life. These problems relate to the differences in the state of charge appearing between cells of a module and between modules during the charging and discharging processes for charging and discharging the battery made up of said modules. These differences in the state of charge cause a deficient charge in all the cells, varying the voltage obtained in the battery. This difference is even more problematic at low charge levels. This problem is heightened when the battery comprises cells or modules with different capacities, or when the internal impedance of said cells varies due to manufacturing errors. Furthermore, when the charging process for charging one cell ends before that of the rest of the cells and it continues to be charged, or when the discharging process for discharging one cell ends before that of the rest of the cells and continues to be discharged, degradations occur in the cells, impairing their operation and worsening the mentioned problems.

A number of alternatives for trying to mitigate these problems are known in the state of the art. Some of these alternatives use the concept of charge balancing, taking the cells that are already charged out of the charging circuit so that the difference in the state of charge does not affect the charging process for charging the rest of the cells.

Others use a parallel arrangement of modules and cells to compensate for the voltage drop when the cells behaving anomalously are taken out of the circuit. Other systems use a transformer to obtain this voltage compensation. US2011/0267005 and US2012/0074907 disclose such cell balancing schemes using flyback/transformers.

These technical problems relate to managing charge balance between elements making up a battery such as charging cells or modules. Additionally, the state of the art makes use of complex management systems for managing the polarity of a specific electronic element within a more complex circuit, or even for managing the shunt.

The present invention establishes an electronic configuration for managing both the polarity and the shunting of an electronic element, particularly a charging cell or a module formed by charging cells, which reduces the number of switches and other components involved in this management.

This lower number of components also affects the proposal for managing a charging module or a battery formed by charging modules in which the electronic configuration for managing the electronic element is integrated in the overall circuit. The number of components in this integration is lower not only because of the individual optimization in each managed element but because of the dependence between components, further reducing the number of switches required for managing charge balance.

### Description of the Invention

The present invention proposes an improved solution to the preceding problems by means of an electronic device according to claim 1 which, with a reduced number of components, allows having full control over a specific electronic element, i.e., it allows its forward, reverse or shunted polarization. An inventive use is made of this solution for managing a specific component in a more complex structure for managing modules in a battery made up of modules and in managing cells within a specific module.

Another object of the invention is a battery module according to claim 2, a battery according to claim 3, a management system according to claim 5, a measurement method for measuring the state of charge according to claim 7 and a management method for managing charge level balance according to claim 8. The dependent claims define preferred embodiments of the invention.

Throughout the description, "monitoring" will be understood as a measurement process carried out over time in a manner that is not necessarily continuous, for example by means of taking discrete measurements with a defined, not necessarily constant, periodicity.

It will likewise be understood throughout the description that an electric energy storage unit, for example a charging cell or a module made up of cells, is at "full charge" when its charge level is not below its maximum level minus a specific pre-established threshold.

In the same manner, throughout the description it will be understood that an electric energy storage unit, for example a charging cell or a module made up of cells, is at the "discharging level" when its charge level is below its minimum level plus a specific pre-established threshold.

According to the invention, the device suitable for managing the direction of current traveling through a two-terminal electrical component, particularly an electric charge storage cell, comprises:
- a main input terminal and a main output terminal,
- an input switch,
- an output switch,
- a shunt switch,
- a reversing switch, and
- the electrical component with a first terminal and a second terminal.

These components are in electrical connection such that the following conditions are proven to be true:
- the input switch, the electrical component and the output switch are arranged in series and in that order, such that the input switch is in electrical connection with the main input terminal and the output switch is in electrical connection with the main output terminal,
- the shunt switch with one of its terminals in electrical connection with a point located between the input switch and the electrical component and the other terminal in electrical connection with the main output terminal; and,
- the reversing switch with one of its terminals in electrical connection with the main input terminal and the other terminal in electrical connection with a point located between the electrical component and the output switch.

Under these conditions, the electrical component is arranged in forward polarization when the input and output switches are closed and when the shunt and reversing switches are open.

To describe the passage of current, it will be considered as a reference that the device is polarized such that the current circulates from its input terminal to its output terminal.

The current therefore flows through the conductor comprised in the input switch, being prevented from flowing through the conductor comprised in the reversing switch, enters the electronic component through the input terminal, exits through the output terminal and flows through the conductor comprised in the output switch, the current being prevented from flowing through the conductor comprised in the shunt switch.

Also under these conditions, the electrical component is arranged in reverse polarization when the input and output switches are open and when the shunt and reversing switches are closed. The current therefore takes a direction opposite the straight polarity of the electronic component, entering it through the output terminal and exiting through the input terminal. This is achieved because the current flows through the conductor comprised in the shunt switch, being prevented from flowing through the conductor comprised in the output switch, travels through the electrical component from its output terminal to its input terminal and flows through the conductor comprised in the reversing switch, the current being prevented from flowing through the conductor comprised in the input switch.

Also under these conditions, the electrical component is arranged in forward shunting when the input and shunt switches are closed and when the output and reversing switches are open. The current therefore flows through the conductor comprised in the input switch, being prevented from flowing through the conductor comprised in the reversing switch, flows through the conductor comprised in the shunt switch, being prevented from entering the electronic component and the current being prevented from flowing through the conductor comprised in the output switch.

Also under these conditions, the electrical component is arranged in reverse shunting when the input and shunt switches are open and when the output and reversing switches are closed. The current therefore flows through the conductor comprised in the reversing switch, being prevented from flowing through the conductor comprised in the input switch and being prevented from entering the electronic component, flows through the conductor comprised in the output switch, the current being prevented from flowing through the conductor comprised in the shunt switch.

There are two different shunt operation configurations; one of them involves closing the input switch and the other involves closing the output switch. This allows shunting two consecutive devices in series such that they are in electrical connection with one another. This particular configuration is of special interest when the electrical component is a module comprising cells also arranged in series. In this case the electrical connection with one another is as follows: the modules are now connected in series, such that if a pair of modules are to be shunted, the option of shunting the first module according to the reverse shunt configuration and shunting the second module according to the forward shunt configuration allows the last cell of the first shunted module and the first cell of the second shunted module to be connected, which allows closing a balancing circuit as will be described below joining the two adjacent modules.

Advantageously, this distribution of switches allows establishing a straight polarity configuration, a reverse polarity configuration and two different shunt configurations with just four elements.

By making use of this configuration, the invention comprises a battery formed by a plurality of modules connected in series, where the number of modules is such that it has two more than what are needed to reach the voltage of the bus that is to be powered with the battery.

Having two additional modules with respect to what are needed to maintain the nominal voltage of the battery is justified both in the case of carrying out a charge balancing managing entire modules and in the case in which the charge balancing is carried out by managing individual cells.

In the first case it is necessary to reverse a module and in the second case it is necessary to shunt a pair of modules (as will be described below). In both cases, if there were not additional modules, the resulting voltage would be less than the nominal voltage at a value equal to twice the voltage of a cell. Therefore, in order for the voltage of the battery to be maintained the same at the nominal voltage throughout either the entire charge balancing process in modules or the entire charge balancing process in cells, the battery is configured with two additional modules with respect to what are needed for providing the nominal voltage where they will be shunted as long as no case of balancing is activated.

This solution is different from those which have been proposed in the state of the art, because the voltage increase was achieved in said solutions by means of placing modules in parallel or by means of placing a DC/DC converter responsible for increasing the voltage to the nominal value.

A circuit maintaining two of the modules shunted will be described in the detailed description of the invention. The modules that are shunted allow being managed outside the charging process of the rest of the modules. This shunt allows balancing charge both between modules and between cells comprised in the modules. In this second case, the circuit itself is what also manages the charge balance between cells making up each module in the two isolated modules.

The maximum charge level allowed by a charging cell when it is damaged is less than if it were not damaged. In the charging process this effect gives rise to the damaged cell reaching the charge level before the rest of the cells do.

Advantageously, the charging and discharging process for charging and discharging the battery comprising a management system according to the invention is faster because instead of simply excluding the cells damaged in the process, once the damaged cell reaches its maximum charge level its polarity is reversed so that its charge contributes to the rest of the cells completing their process sooner.

Similarly, during the charging process it is possible to make a module that has already reached its maximum charge level transfer part of its charge to the rest of the modules, also accelerating the charging process while at the same time protecting said module from being damaged or being damaged to a greater extent if it is already damaged. Advantageously, this method also accelerates the charging process and prevents damage in the modules which, because of manufacturing tolerance or for any other reason, had a capacity different from the rest or because the module already has a higher charge level than the rest of the modules.

As the result of both processes, both the entirety of the operating modules and the cells reach their maximum charge level if the management takes care of managing charge; or both the entirety of the operating modules and the cells reach their maximum discharge level if the management takes care of managing discharge, for example because an electric motor is being powered.

All the technical features, the described method steps or both contained in this description, including the claims and drawings, can be combined in any combination, with the exception of the combinations of such mutually excluding features.

### Description of the Drawings

These and other features and advantages of the invention will be understood more clearly based on the following detailed description of a preferred embodiment given solely by way of illustrative and non-limiting example in reference to the attached drawings.
Figures 1a, 1b, 1c show the different switch configurations of the device of the invention allowing an electrical component to be in forward, reverse or shunted polarization.
Figure 2 shows a general diagram of a particular embodiment of the device in the form of a battery module used repeatedly in a series configuration to give rise to a battery.
Figure 3 shows a graph of the evolution of the charge over time both in a module when it is the object of the charge balance method (solid line) and in the entire battery.
Figure 4 shows a general diagram of a particular embodiment of a battery management system that can be applied to a battery such as the one shown in the preceding figure.

### Detailed Description of the Invention

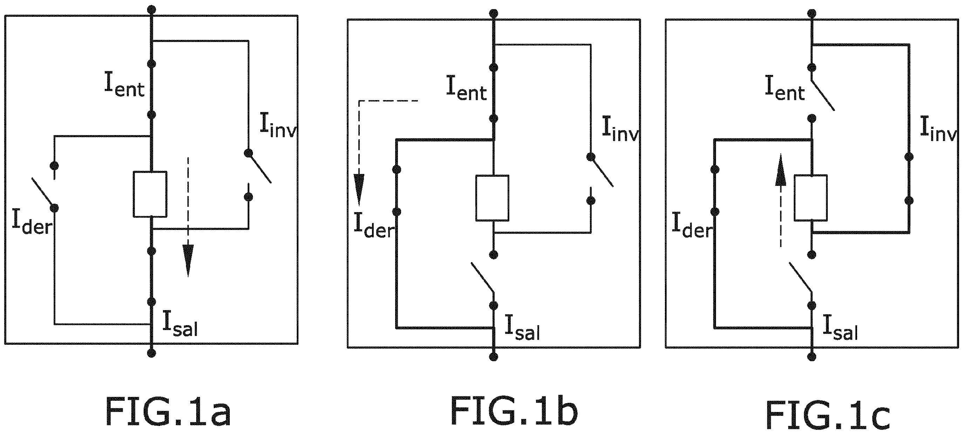

Figure 1 shows a particular embodiment of an electronic device according to the invention. This device comprises an electrical component powered by an energy source through the two terminals of the component referred to as main input terminal and main output terminal, with the intermediation of a set of at least four switches, the combination of which allows the component to be able to operate in straight polarity, in reverse polarity or shunted.

This is achieved by means of placing four switches in each electronic device, an input switch, an output switch, a shunt switch and a reversing switch, located such that:
- the input switch, the electrical component and the output switch are arranged in series and in that order, such that the input switch is in electrical connection with the main input terminal and the output switch is in electrical connection with the main output terminal,
- the shunt switch with one of its terminals in electrical connection with a point located between the input switch and the electrical component and the other terminal in electrical connection with the main output terminal; and,
- the reversing switch with one of its terminals in electrical connection with the main input terminal and the other terminal in electrical connection with a point located between the electrical component and the output switch.

Each of Figures 1a, 1b and 1c depicts the conductors associated with the switches that remain open using a thin line. When the device is in the operative mode and current is circulating as required according to the configuration of the switches, this current is depicted according to a path shown using a thick line. The electrical component in each case is a single charging cell and is depicted with the power source symbol.

Figure 1a particularly shows how the current passes through the cell from the input terminal to the output terminal without being shunted through the shunt or reversing conductors.

Figure 1b shows one of the possibilities of reversing where the current does not pass through the charging cell because it is shunted through the shunt conductor. According to another embodiment, the shunting can be carried out through the reversing conductor.

Figure 1c shows the reversing configuration. The combined use of the shunt and reversing conductors make the direction of the passage of current in the cell opposite that shown in Figure 1a.

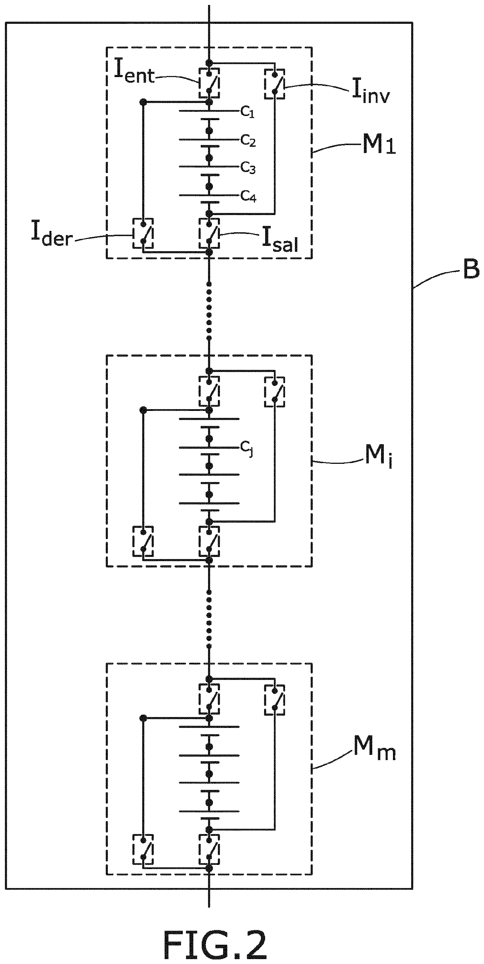

Figure 2 shows an example of a battery (B) according to the invention. This battery (B) comprises a set of modules (*M₁,M₂,M₃,...Mₘ*) arranged in series, each of them in turn formed by a plurality of cells (*cⱼ,j*=1..*n*) also arranged in series. In this embodiment there are ***m*** modules and each module has ***n*** cells. The series connection of the modules (*M*₁*,M*₂*,M*₃*,*...*M*ₘ) results in the series connection of all the cells.

Each of the modules (*Mᵢ*) has input, output, reversing and shunt switches, according to the device structure shown in the particular embodiment described above based on Figures 1a, 1b and 1c. Therefore, each module (*Mᵢ*) has an input switch (*Iₑₙₜ*) and an output switch (*Iₛₐₗ*), such that the input switch (*Iₑₙₜ*), the module (*Mᵢ*) and the output switch (*Iₛₐₗ*) are arranged in series and in that order, such that the input switch (*Iₑₙₜ*) is in electrical connection with the input terminal of the first cell (*c*₁) of module (*Mᵢ*) and the output switch (*Iₛₐₗ*) is in electrical connection with the output terminal of the last cell (*c*₄) of module (*Mᵢ*). In turn, the shunt switch (*I_{der}*) has one of its terminals in electrical connection with a point located between the input switch (*Iₑₙₜ*) and the input of the first cell (*c*₁) of module (*Mᵢ*) and the other terminal in electrical connection with the output terminal of the last cell (*c*₄) of module (*Mᵢ*). Finally, each module (*Mᵢ*) also has a reversing switch (*Iᵢₙᵥ*) with one of its terminals in electrical connection with the input terminal of module (*Mᵢ*) and the other terminal in electrical connection with a point located between the output of the last cell (*c*₄) of module (*Mᵢ*) and the output switch (*Iₛₐₗ*). The output of the shunt switch (*I_{der}*), connected with the output of the output switch (*Iₛₐₗ*), is in connection with the input of the input switch (*Iₑₙₜ*) of the following module (*M*_{*i*+1}), which is in turn in connection with the input of the reversing switch (*I*ᵢₙᵥ) of said following module (*M*_{*i*+1}).

According to this configuration, the battery (B) is formed by a plurality of modules (*Mᵢ*) where it is possible to manage each module independently from the rest of the modules. Particularly, each module (*Mᵢ*) can be connected in series or shunted. In this last case, the charge thereof does not affect the charge of the battery (B) shown in its terminals.

This configuration allows carrying out a charge balancing between modules of the battery (B) during the charging or discharging process, which allows managing the direction of the current through the internal cells of the modules. It is therefore possible to transfer the charge or part of it to the rest of the modules.

Considering the case of a charging process, in a normal situation there are two additional modules in the system that are shunted for providing the nominal voltage. Following with the preceding example of Figure 2, there would be *m* modules. In a normal situation, the energy from the charger is distributed among the *m*-2 modules that are connected because in normal conditions, as indicated, two of the modules are shunted.

Managing charge balancing starts with monitoring the state of charge of each module (*Mᵢ*), such that when a module *Mᵢ* reaches a pre-established value corresponding to the full charge of its capacity, whereas the rest of the modules of the battery (B) have still not reached full charge, during the charging process, or when it reaches a pre-established value corresponding to the discharging level, whereas the rest of the modules of the battery (B) have still not reached the discharging level, during the discharging process, the reversal of said module which has reached said level before the rest takes place.

To that end, the input, output, reversing and shunt switches of module *Mᵢ* which has reached said level before the rest are configured in reverse polarity, and the two additional modules that were shunted are configured in straight polarity, all this until the charge of module *Mᵢ* is compensated with the charge level of the rest of the modules.

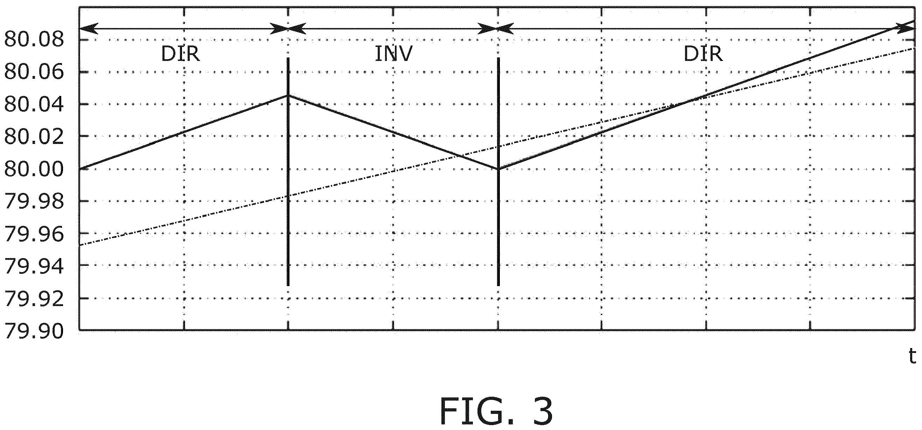

Figure 3 shows the evolution followed by the charge of the battery (B) and the charge of the module *Mᵢ* that reaches the level before the rest. In this particular case of the drawing, the evolution shows a charging process. The solid line is the evolution of the state of charge of module *Mᵢ* in its three steps: normal charge (DIR), reversing the module for balancing (INV) transferring its energy to the rest of the modules and returning to the normal charge when the balancing ends (DIR). Simultaneously, the dotted line shows the evolution of the overall state of charge of the battery (B) during these three steps. It should be mentioned that when the module is polarized in a forward manner forma (DIR) the two additional charges do not intervene because they are shunted; nevertheless, when the module *Mᵢ* is reversed its charge is transferred to the rest of the modules, including the two additional modules, because they are in forward polarization instead of shunted so that the voltage does not drop.

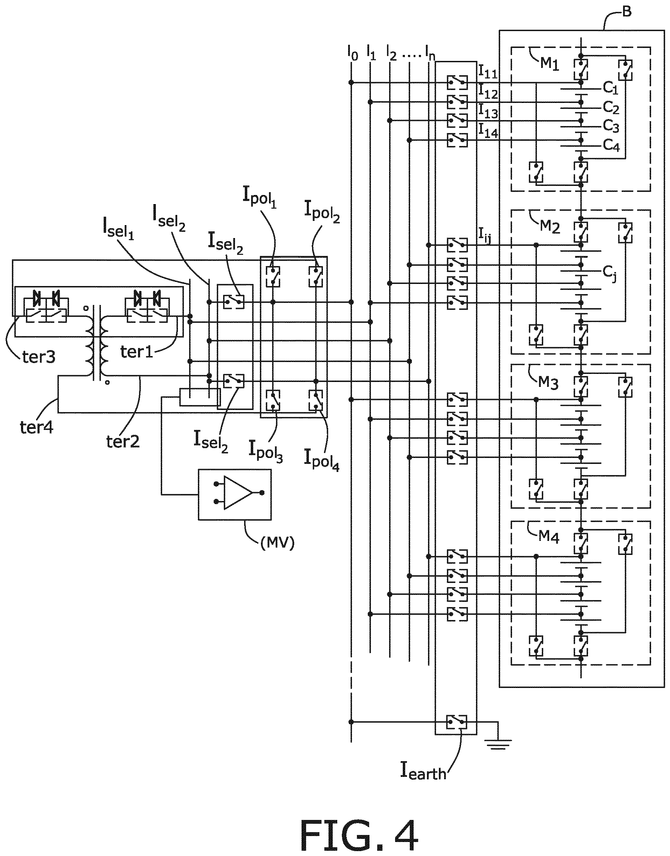

Figure 4 shows an example of a charge balancing system for a battery (B) such as that shown in Figure 2, but in this particular case the battery (B) comprises 4 modules (*M*₁*,M*₂*,M*₃*,M*₄) connected in series. In turn, each of the modules comprises 4 cells (*c*₁*,c*₂*,c*₃*,c*₄) connected in series.

Each of the modules (*Mᵢ*) therefore has, in addition to the aforementioned input switch (*Iₑₙₜ*), output switch (*Iₛₐₗ*), shunt switch (*I_{der}*) and reversing switch (*Iᵢₙᵥ*), lines accessing the input terminal of each cell (*cⱼ*) to allow the individual management both of the modules (*Mᵢ*) and of the cells (*cⱼ*) making them up. Each of these lines comprises a switch *Iᵢⱼ*. Throughout the description these lines are identified with the name of the module (*Mᵢ*) and of the cell (*cⱼ*), i.e., *lᵢⱼ* is the line joining the input terminal of cell *j* of module *i* and *Iᵢⱼ* is the switch of said line. For example, line *l*₁₁, which is switched by switch *I*₁₁, enters cell 1 of module 1. Line *l*₁₂, which is switched by switch *I*₁₂, enters cell 2 of module 1, and so on and so forth for all the cells (*cⱼ*) and all the modules (*Mᵢ*).

The system of this embodiment also comprises:
- 5 lines *lₛ*, for *s* = 0,...4 where particularly *l*₀ is identified as the first line and *l*₄ as the last line, i.e., there is one more line than cells per module,
- a switch *Iₑₐᵣₜₕ* interposed between line *l*₀ and earth,
- a first measurement line *l*_{*sel*1} and a second measurement line *l*_{*sel*2},
- control means suitable for acting on any of the switches comprised in the system, and
- a voltage meter (MV), one of the terminals of which is in electrical connection with line *l*_{*sel*1} and the other terminal is in electrical connection with line *l*_{*sel*2}.

The measurement lines are arranged such that the first measurement line *l*_{*sel*1} is in electrical connection with the odd lines *lₛ*, for *s*=1,3 and the second measurement line *l*_{*sel*2} is in electrical connection with the even lines *lₛ*, for *s*=0,2,4**.** Furthermore, said second measurement line *l*_{*sel*2} is in electrical connection with the first line *l*₀ with the interposition of a first selector switch *I*_{*sel*1} and this same line is also in electrical connection with the last line *l*₄ with the interposition of a second selector switch *I*_{*sel*2}.

The connection between each of the cells *cⱼ* and the lines *l*₀ to *l*₄ is established as follows:
- each cell *cⱼ* of each of the odd modules *Mᵢ*, for *i*=1,3 is in electrical communication with line *l*_{*j*-1} witch the interposition of switch *Iᵢⱼ* and where the connection with cell *cⱼ* is established in the terminal facing the main input terminal of the module; and where,
- each cell *cⱼ* of each of the even modules *Mᵢ*, for *i*=2,4 is in electrical communication with line *l*_{4-*j*+1} with the interposition of switch *Sᵢⱼ* and where the connection with cell *cⱼ* is established in the terminal facing the main input terminal of the module.

The cells of a module are therefore connected with the lines *lₛ* differently depending on if it is an even module or an odd module. In the case of odd modules *Mᵢ*, for *i*=1,3, cells *c*₁*,c*₂*,c*₃*,c*₄ are connected correlatively to lines *l*₀*,l*₁*,l*₂*,l*₃; whereas in the case of even modules *Mᵢ* for *i*=2,4, cells *c*₁*,c*₂*,c*₃*,c*₄ are connected correlatively and in reverse order to lines *l*₁,*l*₂,*l*₃,*l*₄, such that *c*₁ is connected to *l*₄, *c*₂ is connected to *l*₃, *c*₃ is connected to *l*₂ and *c*₄ is connected to *l*₁.

Furthermore, in a particular embodiment, the system allows managing charge balance between a specific cell (*cⱼ*) comprised in a module (*Mᵢ*) and the rest of the cells of the same module (*Mᵢ*). To that end, it additionally comprises a modified bidirectional flyback device. This device has four terminals: a first terminal (ter1) and a second terminal (ter2) for connection with a first winding of the transformer and two terminals, a third terminal (ter3) and a fourth terminal (ter4), for connection with the second winding of the transformer.

The first terminal (ter1) is in electrical connection on one side with the first measurement line *l*_{*sel*1}, and on the other side with the first winding of the transformer by means of a series connection of two parallel arrangements: one of a diode and a switch *I*_{*f*1} and the other of a diode located in the opposite direction as the first one and a switch *I*_{*f*2}.

The second terminal (ter2) is in electrical connection on one side with the second measurement line *l*_{*sel*2} and on the other side with the side opposite the first terminal (ter1) of the first winding of the transformer.

The third terminal (ter3) is in electrical connection on one side with line *l*₀ with the interposition of a first polarity selector switch *I*_{*pol*1} and with line *l*₄ with the interposition of a second polarity selector switch *I*_{*pol*2}, and on the other side with the second winding of the transformer by means of a series connection of two parallel arrangements: one of a diode and a switch *I* and the other of a diode located in the opposite direction as the first one and a switch *I*_{*f*4}, the diode of *I*_{*f*1} and the diode of *I*_{*f*3} having the same polarity and the diode of *I*_{*f*2} and the diode of *I*_{*f*4} having the same polarity.

The fourth terminal (ter4) is in electrical connection with line *l*₀ with the interposition of a third polarity selector switch *I*_{*pol*3} and in electrical connection with the last line *l*₄ with the interposition of a fourth polarity selector switch *I*_{*pol*4}.

The control means are suitable for at least establishing a configuration of the switches for selecting the cell *cⱼ* of module *Mᵢ*, establishing a specific set of switches as closed:
- if the cell *cⱼ* to be selected belongs to any module *Mᵢ* except the last one, the reversing switch (*Iᵢₙᵥ*) and output switch (*Iₛₐₗ*) of module *Mᵢ* and the input switch (*Iₑₙₜ*) and shunt switch (*I_{der}*) of module *M*_{*i*+1}, the input switch (*Iₑₙₜ*) and output switch (*Iₛₐₗ*) of the rest of the modules, in addition to switch *I*_{*i*1}, are closed
- if the cell *cⱼ* to be selected belongs to the last module *M*₄, the switch *I*_{1*n*} with *n*=4 and switch *Iₑₐᵣₜₕ*, in addition to the input switch (*Iₑₙₜ*) and output switch (*Iₛₐₗ*) of the rest of the modules, except for one of the modules, of which only the input switch (*Iₑₙₜ*) and shunt switch (*I_{der}*) will be closed, are closed.

In addition to the already indicated switches, the following switches are also established as closed:
- if the cell to be selected is a cell *cⱼ* with *j* having values from 1 to 3, switch *Iᵢⱼ* and switch *Iᵢⱼ*+1,
- if the cell to be selected is cell *c*₄ of module *Mᵢ*, switch *I*_{*i*4}, switch *I*_{*i*+1.1} and furthermore
   ∘ either switch *I*_{*sel*1} for even *i,*
   ∘ or switch *I*_{*sel*2} for odd ***i***,
- if the cell is *cⱼ* of module *Mᵢ* for even *j*,
   ∘ either switches *I*_{*pol*2} and *I*_{*pol*3} for even ***i***,
   ∘ or switches *I*_{*pol*1} and *I*_{*pol*4} for odd ***i***,
- if the cell is *cⱼ* of module *Mᵢ* for odd ***j***,
   ∘ either switches *I*_{*pol*1} and *I*_{*pol*4} for even ***i***,
   ∘ or switches *I*_{*pol*2} and *I*_{*pol*3} for odd *i*;
and establishing the rest of the switches as open.

In a particular embodiment, the system allows managing charge balancing of cells during a charging process for charging the battery (B). This management starts with monitoring the state of charge of each cell (*cⱼ*), such that when a cell *cⱼ* reaches a high enough charge level with respect to the rest of the cells, the charge transfer from said cell *cⱼ* to the rest of the cells of said module (*Mᵢ*) takes place. Although two consecutively arranged modules are shunted, the charge of the selected cell *cⱼ* is exchanged with the charge of the rest of the cells of the same module without affecting the cells of the other shunted module (*M*_{*i*+1}). Nevertheless, the consecutively arranged module (*M*_{*i*+1}) provides at least one switch and one line serving for the current transfer in the charge balancing process of the selected cell.

In a particular embodiment, the criterion marking this need to establish a circuit configuration for the charge transfer from cell *cⱼ* to the rest of the cells of the same module (*Mᵢ*) consists of checking if the voltage value of cell *cⱼ* is less than a value *t*=*p·V̅, p* being a factor comprised between a pre-established minimum value and a pre-established maximum value and *V̅* the mean value of the voltage measured in all the cells of said module (*Mᵢ*). In a particular embodiment, the pre-established minimum value is 0.3 and the pre-established maximum value is 0.5.

In the event that this charge transfer is necessary, it is performed differently according to the parity of the module *Mᵢ* to which cell *cⱼ* on which said transfer will be performed belongs, and also according to the parity of said cell *cⱼ*:
- configuring the system in the selection mode for selecting cell *cⱼ* and closing the following switches of the modified bidirectional flyback device if *i* is even:
   ∘ switches *I*_{*f*1} and *I*_{*f*4} *if j* is even,
   ∘ switches *I*_{*f*2} and *I*_{*f*3} if *j* is odd,
- configuring the system in the selection mode for selecting cell *cⱼ* and closing the following switches of the modified bidirectional flyback device if *i* is odd:
   ∘ switches *I*_{*f*2} and *I*_{*f*3} if *j* is even,
   ∘ switches *I*_{*f*1} and *I*_{*f*4} if *j* is odd.

The flyback is therefore responsible for the charge transfer between the selected cell and the rest of the cells being possible compensating for the potential difference established by this second set of cells arranged in series.

Managing charge balancing of cells during a discharging process for discharging the battery (B) starts with monitoring the state of discharge of each cell (*cⱼ*), such that when a cell *cⱼ* reaches a low enough charge level with respect to the rest of the cells, the charge transfer from the rest of the cells of said module (*Mᵢ*) to the aforementioned cell *cⱼ* takes place.

This charge transfer is performed differently according to the parity of the module *Mᵢ* to which cell *cⱼ* on which said transfer will be performed belongs:
- configuring the system in the selection mode for selecting cell *cⱼ* and closing the following switches of the modified bidirectional flyback device if *i* is even:
   ∘ switches *I*_{*f*1} and *I*_{*f*4} if *j* is even,
   ∘ switches *I*_{*f*2} and *I*_{*f*3} if *j* is odd,
- configuring the system in the selection mode for selecting cell *cⱼ* and closing the following switches of the modified bidirectional flyback device if *i* is odd:
   ∘ switches *I*_{*f*2} and *I*_{*f*3} if *j* is even,
   ∘ switches *I*_{*f*1} and *I*_{*f*4} if *j* is odd.

In a particular embodiment, the criterion marking this need to establish a circuit configuration for the charge transfer to cell *cⱼ* from the rest of the cells of the same module consists of checking if the voltage value of cell *cⱼ* is greater than a value *s*=*q·V̅*, *q* being a factor comprised between a pre-established minimum value and a pre-established maximum value and *V̅* the mean value of the voltage measured in all the cells of said module *Mᵢ*. In a particular embodiment, the pre-established minimum value is 0.7 and the pre-established maximum value is 0.9.

Once the charge balance either between modules or between cells has started, the monitoring process allows determining when this charge balance must be stopped. Once the charging of the selected cell (*cⱼ*) or module (*Mᵢ*) has stopped because it is not compensated with the rest there is either a set of cells the charge of which is compensated or a set of modules the charge of which is compensated. Stopping the charge balance process means that the control means again arrange the modules or cells in series to operate as usual.

Nevertheless, in the case of the modules, given that the battery (B) comprises a pair of redundant modules, two of the modules will always be shunted.

## Claims

1. A management system for selecting a cell in a specific module of a battery (B),
- the battery (B) comprising a number *m* of modules (*M*₁,*M*₂,...,*Mₘ*) in series and each of the modules comprising an electronic device adapted to managing the direction of current traveling through a two-terminal electrical component, wherein the electrical component of said device is a series arrangement of an even number *n* of electric charge storage cells (*c*₁,*c₂,*...*,cₙ*), the two-terminal electrical component, comprising:
- a main input terminal and a main output terminal,
- an input switch,
- an output switch,
- a shunt switch,
- a reversing switch, and
- the electrical component with a first terminal and a second terminal,
wherein:
- the input switch, the electrical component and the output switch are arranged in series and in that order, such that the input switch is in electrical connection with the main input terminal and the output switch is in electrical connection with the main output terminal,
- the shunt switch with one of its terminals in electrical connection with a point located between the input switch and the electrical component and the other terminal in electrical connection with the main output terminal; and,
- the reversing switch with one of its terminals in electrical connection with the main input terminal and the other terminal in electrical connection with a point located between the electrical component and the output switch;
- said battery (B) further comprising control means suitable for establishing three possible states with respect to any of the modules *Mᵢ* with *i* having a value between 1 and *m*; i.e.,
- in straight polarity with respect to the rest of the modules in series, where the input and output switches are closed and where the shunt and reversing switches are open,
- in reverse polarity with respect to the rest of the modules in series, where the input and output switches are open and where the shunt and reversing switches are closed,
- in forward shunt leaving the module isolated from the rest of the modules in series, where the input and shunt switches are closed and where the output and reversing switches are open,
- in reverse shunt leaving the module isolated from the rest of the modules in series, where the input and shunt switches are open and where the output and reversing switches are closed;
**characterized in that** the management system further comprises:
- for each module there are *n* switches *Iᵢⱼ* where *i*=1..*m* is the index identifying the module and *j*=1*..n* is the index identifying the cell *cⱼ*.
- a number *n*+1 of lines *lₛ,s*=0*,*..*,n* where particularly *l*₀ is identified as the first line and *lₙ* as the last line,
- a switch *Iₑₐᵣₜₕ* interposed between the line *l*₀ and earth,
- a first measurement line *l*_{*sel*1} and a second measurement line *l*_{*sel*2} wherein:
∘ the first measurement line *l*_{*sel*1} is in electrical connection with the odd lines *l_{s,}s*=1,3...,
∘ the second measurement line *l*_{*sel*2} is in electrical connection with the even lines *lₛ,s*=0,2...,
∘ the second measurement line *ls*_{*el*2} is in electrical connection with line *l*₀ with the interposition of a first selector switch *S*_{*sel*1} and in electrical connection with line *l*ₙ with the interposition of a second selector switch *S*_{*sel*2}
- control means configured to act on any of the switches comprised in the system,
- a modified bidirectional flyback device with two terminals, a first terminal (ter1) and a second terminal (ter2), for connection with a first winding of a transformer, and two terminals, a third terminal (ter3) and a fourth terminal (ter4), for connection with the second winding of said transformer,
wherein
- each cell *cⱼ* of each of the odd modules (*Mᵢ,i*=1,3,...) is in electrical communication with line *l*_{*j-*1} with the interposition of switch *Iᵢⱼ* and where the connection with cell *cⱼ* is established in the terminal facing the main input terminal of the module,
- each cell *cⱼ* of each of the even modules (*M_{i,}i*=2,4,...) is in electrical communication with line *l*_{*n*-*j*+1} with the interposition of switch *Iᵢⱼ* and where the connection with cell *cⱼ* is established in the terminal facing the main input terminal of the module,
- the first terminal (ter1) of the modified bidirectional flyback device is in electrical connection on one side with the first measurement line *l*_{*sel*1}, and on the other side with the first winding of the transformer by means of a series connection of two parallel arrangements: one of a diode and a switch *I*_{*f*1} and the other of a diode located in the opposite direction as the first one and a switch *I*_{*f*2};
- the second terminal (ter2) of the modified bidirectional flyback device is in electrical connection on one side with the second measurement line *l*_{*sel*2} and on the other side with the side opposite the first terminal of the first winding of the transformer,
- the third terminal (ter3) of the modified bidirectional flyback device is in electrical connection on one side with line *l*₀ with the interposition of a first polarity selector switch *I*_{*pol*1} and with line *lₙ* with the interposition of a second polarity selector switch *I*_{*pol*2}, and on the other side with the second winding of the transformer by means of a series connection of two parallel arrangements: one of a diode and a switch *I*_{*f*3} and the other of a diode located in the opposite direction as the first one and a switch *I*_{*f*4}, the diode of *I*_{*f*1} and the diode of *I*_{*f*3} having the same polarity and the diode of *I*_{*f*2} and the diode of *I*_{*f*4} having the same polarity,
- the fourth terminal (ter4) of the modified bidirectional flyback device is in electrical connection with line *l*₀ with the interposition of a third polarity selector switch *I*_{*pol*3} and in electrical connection with line *lₙ* with the interposition of a fourth polarity selector switch *I*_{*pol*4}, and
wherein the control means are configured to at least establishing a configuration of the switches for selecting a cell *cⱼ* of module *Mᵢ*, establishing the following switches as closed:
- if the cell *cⱼ* to be selected belongs to a module *Mᵢ* with *i* having values between 1 and *m*-1, the reversing switch and output switch of module *Mᵢ* and the input and shunt switch of module *M*_{*i*+1}, the input switch and output switch of the rest of the modules, in addition to switch *I*_{*i*1},
- if the cell *cⱼ* to be selected belongs to the module *Mₘ*, switch *I*_{1*n*} and switch *Iₑₐᵣₜₕ*, in addition to the input and output switches of the rest of the modules, except for one module, of which only the input and shunt switches will be closed,
also configured for establishing the following switches as closed:
- if the cell to be selected is a cell *cⱼ* with *j* having values from 1 to *n-*1, switch *Iᵢⱼ* and switch *I*_{*ij*+1},
- if the cell to be selected is a cell *cₙ* of module *Mᵢ*, switch *Iᵢₙ*, switch *I*_{*i*+1.1} and furthermore
∘ either switch *I*_{*sel*1} for even *i*,
∘ or switch *I*_{*sel*2} for odd *i*,
- if the cell is *cⱼ* of module *Mᵢ* for even *j,*
∘ either switches *I*_{*pol*2} and *I*_{*pol*3} for even *i*,
∘ or switches *I*_{*pol*1} and *I*_{*pol*4} for odd *i*,
- if the cell is *cⱼ* of module *Mᵢ* for odd *j*,
∘ either switches *I*_{*pol*1} and *I*_{*pol*4} for even *i,*
∘ or switches *I*_{*pol*2} and *I*_{*pol*3} for odd *i*;
and configured for establishing the rest of the switches as open.

2. The system according to claim 1, additionally comprising a voltage meter (MV), one of the terminals of which is in electrical connection with line *l*_{*sel*1} and the other terminal in electrical connection with line *l*ₛₑₗ₂.

3. A management method for managing charge level balance within a charging process for charging a system according to claim 2, comprising the steps of:
- monitoring the charge of each of the modules in a battery (B) according of a management system according to claim 2;
- when a specific module *Mᵢ* reaches a pre-established value corresponding to the full charge of its capacity whereas the rest of the modules of the battery (B) have still not reached full charge, the input, output, reversing and shunt switches of module *Mᵢ* which has reached full charge are configured in reverse polarity until the charge of module *Mᵢ* is compensated with the charge level of the rest of the modules.

4. The management method for managing charge level balance within a discharging process for discharging a system according to claim 2, comprising the steps of:
- monitoring the charge of each of the modules in a battery (B) of a management system according to claim 2;
- when a specific module *Mᵢ* reaches a pre-established value corresponding to the discharging level whereas the rest of the modules of the battery (B) have still not reached the discharging level, the input, output, reversing and shunt switches of module *Mᵢ* which has reached full charge are configured in reverse polarity until the charge of module *Mᵢ* is compensated with the charge level of the rest of the modules.

5. The management method for managing charge level balance of a system according to claim 2, the method comprising the steps of:
- monitoring the charge of cells *cⱼ*, with *j* having values between 1 and *n*, of a module *Mᵢ*, wherein the monitoring comprises the steps of:
∘ for each cell *cⱼ* with *j* having values between 1 and *n*:
▪ configuring the system in the selection mode for selecting cell *cⱼ* of module *Mᵢ*;
▪ providing the measurement value obtained in the voltage meter (MV);
- determining if it is necessary to establish a circuit configuration for balancing between a specific cell *cⱼ* and the rest of the cells of its module *Mᵢ*;
- in response to a command to establish a circuit configuration for balancing cell *cⱼ* of module *Mᵢ*, *i* being even, configuring the system in the selection mode for selecting cell *cⱼ* and closing the following switches of the modified bidirectional flyback device:
∘ switches *I*_{*f*1} and *I*_{*f*4} *if j* is even,
∘ switches *I*_{*f*2} and *I*_{*f*3} if *j* is odd,
- in response to a command to establish a circuit configuration for balancing cell *cⱼ* of module *Mᵢ*, *i* being odd, configuring the system in the selection mode for selecting cell *cⱼ* and closing the following switches of the modified bidirectional flyback device:
∘ switches *I*_{*f*2} and *I*_{*f*3} if *j* is even,
∘ switches *I*_{*f*1} and *I*_{*f*4} if *j* is odd.

6. The method according to claim 5, wherein the determination of if it is necessary to establish a circuit configuration for balancing cell *cⱼ* and the rest of the cells of the same module consists of checking if the voltage value of the cell *cⱼ* is less than a value *t*=*p·V̅, p* being a factor comprised between a pre-established minimum value and a pre-established maximum value, and *V̅* being the mean value of the voltage measured in all the cells of said module *Mᵢ*.

7. The method according to claim 6, wherein the pre-established minimum value is 0.3 and the pre-established maximum value is 0.5.

8. The method according to claim 5, wherein the determination of if it is necessary to establish a circuit configuration for balancing cell *cⱼ* and the rest of the cells of the same module consists of checking if the voltage value of the cell *cⱼ* is greater than a value *s*=*q·V̅, q* being a factor comprised between a pre-established minimum value and a pre-established maximum value and *V̅* being the mean value of the voltage measured in all the cells of said module *Mᵢ*.

9. The method according to claim 8, wherein the pre-established minimum value is 0.7 and the pre-established maximum value is 0.9.

## Patentansprüche

1. Verwaltungssystem zur Auswahl einer Zelle in einem bestimmten Modul einer Batterie (B),
wobei die Batterie (B) eine Anzahl *m* an Modulen (M₁, M₂, ..., Mₘ) in Reihe umfasst, und jedes der Module eine elektronische Vorrichtung umfasst, die geeignet ist, die Richtung des Stromflusses durch eine elektrische Komponente mit zwei Anschlüssen zu verwalten, wobei die elektrische Komponente der Vorrichtung eine Reihenanordnung einer geraden Anzahl *n* elektrischer Ladungsspeicherzellen (C₁, C₂,...,Cₙ) ist, wobei die elektrische Komponente mit den zwei Anschlüssen umfasst:
einen Haupteingangsanschluss und einen Hauptausgangsanschluss,
einen Eingangsschalter,
einen Ausgangsschalter,
einen Shuntschalter,
einen Umschalter, und
die elektrische Komponente mit einem ersten Anschluss und einem zweiten Anschluss:
wobei:
der Eingangsschalter, die elektrische Komponente und der Ausgangsschalter in dieser Reihenfolge in Reihe angeordnet sind, so dass der Eingangsschalter in elektrischer Verbindung mit dem Haupteingangsanschluss steht, und der Ausgangsschalter in elektrischer Verbindung mit dem Hauptausgangsanschluss steht,
der Shuntschalter mit einem seiner Anschlüsse in elektrischer Verbindung mit einem Punkt steht, der zwischen dem Eingangsschalter und der elektrischen Komponente liegt, und der andere Anschluss in elektrischer Verbindung mit dem Hauptausgangsanschluss steht; und
der Umschalter mit einem seiner Anschlüsse in elektrischer Verbindung mit dem Haupteingangsanschluss steht, und der andere Anschluss in elektrischer Verbindung mit einem Punkt steht, der zwischen der elektrischen Komponente und dem Ausgangsschalter liegt;
wobei die Batterie (B) des Weiteren eine Steuereinrichtung umfasst, die zur Festlegung dreier möglicher Zustande in Bezug auf irgendeines der Module ***M**ᵢ* geeignet ist, wobei ***i*** einen Wert zwischen 1 und *m* aufweist; d.h.,
in gerader Polarität in Bezug auf den Rest der Module in Reihe, wobei die Eingangs- und Ausgangsschalter geschlossen sind und wobei die Shunt- und die Umschalter geöffnet sind,
in umgekehrter Polarität in Bezug auf den Rest der Module in Reihe, wobei die Eingangs- und Ausgangsschalter geöffnet sind und die Shunt- und Umschalter geschlossen sind,
im Vorwärtsshunt, in dem das Modul vom Rest der Module in Reihe isoliert verbleibt, wobei die Eingangs- und Shuntschalter geschlossen und die Ausgangs- und Umschalter geöffnet sind,
im Umkehrshunt, in dem das Modul vom Rest der Module in Reihe isoliert verbleibt, wobei die Eingangs- und Shuntschalter geöffnet und die Ausgangs- und Umschalter geschlossen sind,
**dadurch gekennzeichnet, dass**
das Verwaltungssystem des Weiteren umfasst:
für jedes Modul gibt es *n* Schalter ***Iᵢⱼ***, wobei ***i***=1..*m* der Index ist, der das Modul identifiziert, und ***j*** = 1..*n* der Index ist, der die Zelle *cⱼ* identifiziert,
eine Anzahl an *n* + 1 Leitungen ***lₛ**, **s*** = 0, .., *n*, wobei insbesondere ***l₀*** als die erste Leitung und ***lₙ*** als die letze Leitung identifiziert wird,
einen zwischen der Leitung ***l*₀** und der Erde angeordneter Schalter ***I_{erde}***,
eine erste Messleitung ***l*_{*sel*1}** und eine zweite Messleitung ***l*_{*sel*2}**, wobei:
die erste Messleitung ***l*_{*sel*1}** in elektrischer Verbindung mit den ungeraden Leitungen ***lₛ***, **s** = 1, 3 ..., steht,
die zweite Messleitung ***l*_{*sel*2}** in elektrischer Verbindung mit den geraden Leitungen ***lₛ***, **s** = 0, 2 ..., steht,
die zweite Messleitung ***l*_{*sel*2}** in elektrischer Verbindung mit der Leitung ***l*₀**, unter Zwischenschaltung bzw. Einfügung eines ersten Auswahlschalters ***S*_{*sel*1}**, und in elektrischer Verbindung mit der Leitung ***lₙ***, unter Zwischenschaltung eines zweiten Auswahlschalters ***S*_{*sel*2}**, steht,
eine Steuereinrichtung, gestaltet, um auf einem der in dem System enthaltenen Schalter einzuwirken,
eine modifizierte bidirektionale Flyback-Vorrichtung mit zwei Anschlüssen, einem ersten Anschluss (ter1) und einem zweiten Anschluss (ter2), zur Verbindung mit einer ersten Wicklung eines Transformators, und zwei Anschlüssen, einem dritten Anschluss (ter3) und einem vierten Anschluss (ter4), zur Verbindung mit der zweiten Wicklung des Transformators,
wobei:
jede Zelle ***cⱼ*** eines jeden der ungeraden Module (Mᵢ i = 1, 3...) in elektrischer Verbindung mit Leitung ***l*_{*j*-1}** steht, unter Zwischenschaltung eines Schalters ***Iᵢⱼ***, und wobei die Verbindung mit der Zelle ***cⱼ*** an dem Anschluss eingerichtet wird, der dem Haupteingangsanschluss des Moduls zugewandt ist,
jede Zelle ***cⱼ*** eines jeden der geraden Module (Mᵢ i = 2, 4...) in elektrischer Verbindung mit Leitung ***l*_{*n*-*j*+1}** steht, unter Zwischenschaltung eines Schalters ***Iᵢⱼ***, und wobei die Verbindung mit der Zelle ***cⱼ*** an dem Anschluss eingerichtet wird, der dem Haupteingangsanschluss des Moduls zugewandt ist,
der erste Anschluss (ter1) der modifizierten bidirektionalen Flyback-Vorrichtung auf einer Seite mit der ersten Messleitung ***l*_{*sel*1}** in elektrischer Verbindung steht, und auf der anderen Seite mit der ersten Wicklung des Transformators, mittels einer Reihenverbindung aus zwei parallelen Anordnungen: eine aus einer Diode und einem Schalter ***I*_{*f*1}** und die andere aus einer Diode, die in der entgegengesetzten Richtung wie die erste Diode angeordnet ist, und einem Schalter ***I_{f2}***;
der zweite Anschluss (ter2) der modifizierten bidirektionalen Flyback-Vorrichtung auf einer Seite mit der zweiten Messleitung ***l*_{*sel*2}** und auf der anderen Seite mit der Seite, die dem ersten Anschluss der ersten Wicklung des Transformators entgegengesetzt ist, in elektrischer Verbindung steht,
der dritte Anschluss (ter3) der modifizierten bidirektionalen Flyback-Vorrichtung auf einer Seite mit der Leitung ***l*₀**, unter Zwischenschaltung eines ersten Polaritätsauswahlschalters ***I*_{*pol*1}**, und mit der Leitung ***lₙ***, unter Zwischenschaltung eines zweiten Polaritätsauswahlschalters ***I*_{*pol*2}** in elektrischer Verbindung steht, und auf der anderen Seite mit der zweiten Wicklung des Transformators, mittels einer Reihenverbindung aus zwei parallelen Anordnungen: eine aus einer Diode und einem Schalter ***I_{f3}*** und die andere aus einer Diode, die in der entgegengesetzten Richtung wie die erste Diode angeordnet ist, und einem Schalter ***I*_{*f*4}**, in elektrischer Verbindung steht, wobei die Diode von ***I*_{*f*1}** und die Diode von ***I*_{*f*3}** die gleiche Polarität aufweisen, und die Diode von ***I*_{*f*2}** und die Diode von ***I*_{*f*4}** die gleiche Polarität aufweisen,
der vierte Anschluss (ter4) der modifizierten bidirektionalen Flyback-Vorrichtung in elektrischer Verbindung mit der Leitung ***l*₀** steht, unter Zwischenschaltung eines dritten Polaritätsauswahlschalters ***I*_{*pol*3}**, und mit der Leitung ***lₙ***, unter Zwischenschaltung eines vierten Polaritätsauswahlschalters ***I*_{*pol*4}**, in elektrischer Verbindung steht, und
wobei die Steuereinrichtung, gestaltet ist, mindestens eine Konfiguration der Schalter zur Auswahl einer Zelle ***cⱼ*** des Moduls ***Mᵢ*** zu erstellen, wobei eine Einstellung der nachstehenden Schalter als geschlossen erfolgt:
wenn die auszuwählende Zelle ***cⱼ*** zu einem Modul ***Mᵢ** gehört,* mit ***i***, das Werte zwischen 1 und *m* - 1 aufweist: der Umschalter und Ausgangsschalter von Modul ***Mᵢ*** und der Eingangs- und Shuntschalter von Modul ***M*_{*i*+*1*}**, der Eingangsschalter und Ausgangsschalter der restlichen Module, zusätzlich zu Schalter ***I*_{*i*1}**,
wenn die auszuwählende Zelle ***cⱼ*** zu dem Modul ***Mₘ*** gehört: Schalter ***I*_{1*n*}** und Schalter ***I_{erde}***, zusätzlich zu den Eingangs- und Ausgangsschaltern der restlichen Module, ausgenommen ein Modul, bei dem nur die Eingangs- und Shuntschalter geschlossen werden,
und wobei die Steuereinrichtung ebenfalls gestaltet ist, die nachstehenden Schalter als geschlossen einzustellen:
wenn die auszuwählende Zelle eine Zelle ***cⱼ*** ist, mit ***j***, das Werte von 1 bis *n -* 1 aufweist: Schalter ***Iᵢⱼ*** und Schalter ***I*_{*ij*+1}**,
wenn die auszuwählende Zelle eine Zelle ***cₙ*** von Modul ***Mᵢ*** ist: Schalter ***Iᵢₙ***, Schalter ***I*_{*i*+1,1}**, und darüber hinaus
entweder Schalter ***I*_{*sel*1}** für gerade ***i**,*
oder Schalter ***I*_{*sel*2}** für ungerade ***i***,
wenn ***cⱼ*** von Modul ***Mᵢ*** die Zelle ist, für gerade ***j***,
entweder Schalter ***Iₚₒₗ₂*** und ***Iₚₒₗ₃*** für gerade ***i***,
oder Schalter ***I*_{*pol*1}** und ***I*_{*pol*4}** für ungerade ***i**,*
wenn ***cⱼ*** von Modul ***Mᵢ*** die Zelle ist, für ungerade ***j***,
entweder Schalter ***I*_{*pol*1}** und ***I*_{*pol*4}** für gerade ***i***,
oder Schalter ***I*_{*pol*2}** und ***I*_{*pol*3}** für ungerade ***i***;
und wobei die Steuereinrichtung gestaltet ist, die restlichen Schalter als geöffnet einzustellen.

2. System nach Anspruch 1, das zusätzlich einen Spannungsmesser (MV) umfasst, wobei einer seiner Anschlüsse in elektrischer Verbindung mit der Leitung ***l*_{*sel*1}** steht, und der andere Anschluss in elektrischer Verbindung mit der Leitung ***l*_{*sel*2}** steht.

3. Verwaltungsverfahren zur Verwaltung des Ladepegelgleichgewichts in einem Ladeverfahren zum Laden eines Systems nach Anspruch 2, das die nachstehenden Schritte umfasst:
Überwachung der Ladung eines jeden Moduls in einer Batterie (B) gemäß einem Verwaltungssystem nach Anspruch 2;
wenn ein spezifisches Modul ***Mᵢ*** einen vorher festgelegten Wert erreicht, der seiner vollen Ladungskapazität entspricht, wohingegen der Rest der Module der Batterie (B) noch nicht die volle Ladung erreicht hat, werden die Eingangs-, Ausgangs-, Um- und Shuntschalter des Moduls ***Mᵢ***, das die volle Ladung erreicht hat, in umgekehrter Polarität konfiguriert, bis die Ladung des Moduls ***Mᵢ*** durch den Ladungspegel des Rests der Module kompensiert wird.

4. Verwaltungsverfahren zur Verwaltung des Ladepegelgleichgewichts in einem Entladeverfahren zum Entladen eines Systems nach Anspruch 2, das die nachstehenden Schritte umfasst:
Überwachung der Ladung eines jeden Moduls in einer Batterie (B) gemäß einem Verwaltungssystem nach Anspruch 2;
wenn ein spezifisches Modul ***Mᵢ*** einen vorher festgelegten Wert erreicht, der dem Entladungspegel entspricht, wohingegen der Rest der Module der Batterie (B) noch nicht den Entladungspegel erreicht hat, werden die Eingangs-, Ausgangs-, Um- und Shuntschalter des Moduls ***Mᵢ***, das die volle Ladung erreicht hat, in umgekehrter Polarität konfiguriert, bis die Ladung des Moduls ***Mᵢ*** durch den Ladungspegel des Rests der Module kompensiert wird.

5. Verwaltungsverfahren zur Verwaltung des Ladepegelgleichgewichts eines Systems nach Anspruch 2, wobei das Verfahren die nachstehenden Schritte umfasst:
Überwachung der Ladung der Zellen°***cⱼ***, wobei ***j*** Werte zwischen 1 und *n* aufweist, eines Moduls ***Mᵢ***, wobei die Überwachung die nachstehenden Schritte umfasst:
für jede Zelle ***cⱼ*** wobei ***j*** Werte zwischen 1 und *n* aufweist:
Konfigurieren des Systems in den Auswahlmodus zur Auswahl der Zelle ***cⱼ*** von Modul ***Mᵢ***;
Bereitstellung des in dem Spannungsmesser (MV) erhaltenen Messwertes (MV);
Ermittlung, ob es notwendig ist, eine Schaltungskonfiguration zum Abgleich zwischen einer bestimmten Zelle ***cⱼ*** und dem Rest der Zellen ihres Moduls ***Mᵢ*** zu erstellen;
als Antwort auf eine Anweisung, eine Schaltungskonfiguration zum Abgleichen der Zelle ***cⱼ*** von Modul ***Mᵢ***, wobei ***i*** gerade ist, zu erstellen, das Konfigurieren des Systems in den Auswahlmodus zur Auswahl der Zelle ***cⱼ*** und das Schließen der nachstehenden Schalter der modifizierten bidirektionalen Flyback-Vorrichtung:
die Schalter ***I*_{*f*1}** und ***I*_{*f*4}**, wenn ***j*** gerade ist,
die Schalter ***I*_{*f*2}** und ***I*_{*f*3}**, wenn ***j*** ungerade ist,
als Antwort auf eine Anweisung, eine Schaltungskonfiguration zum Abgleichen der Zelle ***cⱼ*** von Modul ***Mᵢ***, wobei ***i*** ungerade ist, zu erstellen, das Konfigurieren des Systems in den Auswahlmodus zur Auswahl der Zelle ***cⱼ*** und das Schließen der nachstehenden Schalter der modifizierten bidirektionalen Flyback-Vorrichtung:
die Schalter ***If*₂** und ***I*_{*f*3}**, wenn ***j*** gerade ist,
die Schalter ***I*_{*f*1}** und ***I*_{*f*4}**, wenn ***j*** ungerade ist.

6. Verfahren nach Anspruch 5, wobei die Ermittlung, ob es notwendig ist, eine Schaltungskonfiguration zum Abgleichen der Zelle ***cⱼ*** und dem Rest der Zellen des gleichen Moduls zu erstellen, darin besteht, zu überprüfen, ob der Spannungswert der Zelle ***cⱼ*** kleiner als ein Wert t = p · Ṽ ist, wobei p ein Faktor ist, der zwischen einem vorgegebenen Minimalwert und einem vorgegebenen Maximalwert liegt, und Ṽ der Mittelwert der in allen Zellen des Moduls ***Mᵢ*** gemessenen Spannung ist.

7. Verfahren nach Anspruch 6, wobei der vorher festgelegte Minimalwert 0,3 und der vorher festgelegt Maximalwert 0,5 beträgt.

8. Verfahren nach Anspruch 5, wobei die Ermittlung, ob es notwendig ist, eine Schaltungskonfiguration zum Abgleichen der Zelle ***cⱼ*** und dem Rests der Zellen des gleichen Moduls zu erstellen, darin besteht, zu überprüfen, ob der Spannungswert der Zelle ***cⱼ*** größer als ein Wert s = q · Ṽ ist, wobei q ein Faktor ist, der zwischen einem vorgegebenen Minimalwert und einem vorgegebenen Maximalwert liegt und Ṽ der Mittelwert der in allen Zellen des Moduls ***Mᵢ*** gemessenen Spannung ist.

9. Verfahren nach Anspruch 8, wobei der vorher festgelegte Minimalwert 0,7 und der vorher festgelegt Maximalwert 0,9 beträgt.

## Revendications

1. Système de gestion destiné à sélectionner une cellule dans un module spécifique d'une batterie (B),
- la batterie (B) comprenant un nombre *m* de modules (M₁, M₂, ..., Mₘ) en série, et chacun des modules comprenant un dispositif électronique apte à gérer la direction du courant circulant à travers un composant électrique à deux bornes, dans lequel le composant électrique dudit dispositif correspond à un agencement en série d'un nombre pair *n* de cellules de stockage de charges électriques (C₁, C₂, ..., Cₙ), le composant électrique à deux bornes comprenant :
- une borne d'entrée principale et une borne de sortie principale ;
- un commutateur d'entrée ;
- un commutateur de sortie ;
- un commutateur de dérivation ;
- un commutateur inverseur ; et
- le composant électrique avec une première borne et une deuxième borne,
dans lequel :
- le commutateur d'entrée, le composant électrique et le commutateur de sortie sont agencés en série et dans cet ordre, de sorte que le commutateur d'entrée est en connexion électrique avec la borne d'entrée principale et que le commutateur de sortie est en connexion électrique avec la borne de sortie principale ;
- le commutateur de dérivation avec l'une de ses bornes en connexion électrique avec un point situé entre le commutateur d'entrée et le composant électrique et l'autre borne en connexion électrique avec la borne de sortie principale ; et
- le commutateur inverseur avec l'une de ses bornes en connexion électrique avec la borne d'entrée principale et l'autre borne en connexion électrique avec un point situé entre le composant électrique et le commutateur de sortie ;
- ladite batterie (B) comprenant en outre un moyen de commande pertinent en vue d'établir trois états possibles relativement à l'un quelconque des modules *Mᵢ*, où *i* présente une valeur comprise entre 1 et *m* ; à savoir :
- en polarité directe relativement au reste des modules en série, où le commutateur d'entrée et le commutateur de sortie sont fermés, et où le commutateur inverseur et le commutateur de dérivation sont ouverts ;
- en polarité inverse relativement au reste des modules en série, où le commutateur d'entrée et le commutateur de sortie sont ouverts, et où le commutateur inverseur et le commutateur de dérivation sont fermés ;
- en dérivation aller, laissant le module isolé du reste des modules en série, où le commutateur d'entrée et le commutateur de dérivation sont fermés, et où le commutateur de sortie et le commutateur inverseur sont ouverts ;
- en dérivation retour, laissant le module isolé du reste des modules en série, où le commutateur d'entrée et le commutateur de dérivation sont ouverts, et où le commutateur de sortie et le commutateur inverseur sont fermés ;
**caractérisé en ce que** le système de gestion comprend en outre :
- pour chaque module, où il existe *n* commutateurs *Iᵢⱼ* où *i* = 1, ..., *m* est l'index identifiant le module et *j* = 1, ... *n* est l'index identifiant la cellule *cⱼ*;
- un nombre *n* + 1 de lignes *lₛ, s* = 0, ..., *n* où spécifiquement la ligne *l*₀ est identifiée comme étant la première ligne et *l*ₙ comme étant la dernière ligne ;
- un commutateur *Iₑₐᵣₜₕ* interposé entre la ligne *l*₀ et la terre ;
- une première ligne de mesure *l*_{*sel*1} et une seconde ligne de mesure *lₛₑₗ₂*, dans lesquelles :
∘ la première ligne de mesure *l*_{*sel*1} est en connexion électrique avec les lignes impaires *l*ₛ, *s* = 1, 3... ;
∘ la seconde ligne de mesure *l*_{*sel*2} est en connexion électrique avec les lignes paires *lₛ*, *s* = 0, 2, ... ;
∘ la seconde ligne de mesure *l*_{*sel*2} est en connexion électrique avec la ligne *l*₀ avec l'interposition d'un premier commutateur sélecteur S_{*sel*1} et en connexion électrique avec la ligne *lₙ* avec l'interposition d'un second commutateur sélecteur S_{*sel*2};
- un moyen de commande configuré de manière à agir sur l'un quelconque des commutateurs compris dans le système ;
- un dispositif indirect bidirectionnel modifié avec deux bornes, une première borne (ter1) et une deuxième borne (ter2), en vue d'une connexion avec un premier enroulement d'un transformateur, et deux bornes, une troisième borne (ter3) et une quatrième borne (ter4), en vue d'une connexion avec le second enroulement dudit transformateur ;
dans lequel :
- chaque cellule *cⱼ* de chacun des modules impairs (M*ᵢ* avec *i* = 1, 3...) est en communication électrique avec la ligne *l*_{*j*-1} avec l'interposition du commutateur *Iᵢⱼ* et où la connexion avec la cellule *cⱼ* est établie dans la borne en regard de la borne d'entrée principale du module ;
- chaque cellule *cⱼ* de chacun des modules pairs (M*ᵢ* avec *i* = 2, 4...) est en communication électrique avec la ligne *l*_{*n-j-*1} avec l'interposition du commutateur *Iᵢⱼ* et où la connexion avec la cellule *cⱼ* est établie dans la borne en regard de la borne d'entrée principale du module ;
- la première borne (ter1) du dispositif indirect bidirectionnel modifié est en connexion électrique sur un côté avec la première ligne de mesure *l*_{*sel*1}, et sur l'autre côté avec le premier enroulement du transformateur, au moyen d'une connexion en série de deux agencements parallèles : l'un d'une diode et d'un commutateur *I*_{*f*1} et l'autre d'une diode située dans la direction opposée à la première et d'un commutateur *I*_{*f*2} ;
- la deuxième borne (ter2) du dispositif indirect bidirectionnel modifié est en connexion électrique sur un côté avec la seconde ligne de mesure *l*_{*sel*2} et sur l'autre côté avec le côté opposé à la première borne du premier enroulement du transformateur ;
- la troisième borne (ter3) du dispositif indirect bidirectionnel modifié est en connexion électrique sur un côté avec la ligne *l*₀ avec l'interposition d'un premier commutateur sélecteur de polarité *I*_{*pol*1}, et avec la ligne *lₙ* avec l'interposition d'un second commutateur sélecteur de polarité *I*_{*pol*2}*,* et sur l'autre côté avec le second enroulement du transformateur au moyen d'une connexion en série de deux agencements parallèles : l'un d'une diode et d'un commutateur *I*_{*f*3} et l'autre d'une diode située dans la direction opposée à la première et d'un commutateur *I*_{*f*4}, la diode de *I*_{*f*1} et la diode de *I*_{*f*3} présentant la même polarité et la diode de *I*_{*f*2} et la diode de *I*_{*f*4} présentant la même polarité ;
- la quatrième borne (ter4) du dispositif indirect bidirectionnel modifié est en connexion électrique avec la ligne *l₀* avec l'interposition d'un troisième commutateur sélecteur de polarité *I*_{*pol*3}*,* et en connexion électrique avec la ligne *lₙ* avec l'interposition d'un quatrième commutateur sélecteur de polarité *I*_{*pol*4} ; et
dans lequel le moyen de commande est configuré de manière à au moins établir une configuration des commutateurs pour sélectionner une cellule *cⱼ* du module *Mᵢ*, en établissant les commutateurs suivants comme étant fermés :
- si la cellule *cⱼ* devant être sélectionnée appartient à un module *Mᵢ*, où *i* présente des valeurs comprises entre 1 et *m* - 1, le commutateur inverseur et le commutateur de sortie du module *Mᵢ* et le commutateur d'entrée et le commutateur de dérivation du module M_{*i+*1}, le commutateur d'entrée et le commutateur de sortie du reste des modules, outre le commutateur *I*_{*i*1} ;
- si la cellule *cⱼ* devant être sélectionnée appartient au module *Mₘ*, le commutateur *I*_{1*n*} et le commutateur *Iₑₐᵣₜₕ*, outre le commutateur d'entrée et le commutateur de sortie du reste des modules, à l'exception d'un seul module, dont seuls le commutateur d'entrée et le commutateur de dérivation seront fermés ;
également configuré de manière à établir les commutateurs suivants comme étant fermés :
- si la cellule devant être sélectionnée est une cellule *cⱼ,* où *j* présente des valeurs comprises entre 1 et *n -* 1, le commutateur *Iᵢⱼ* et le commutateur *I*_{*ij+*1} ;
- si la cellule devant être sélectionnée est une cellule *cₙ* du module *Mᵢ*, le commutateur *Iᵢₙ*, le commutateur *I*_{*i+*1.1} et en outre
∘ soit le commutateur *I*_{*sel*1} pour une valeur *i* paire ;
∘ soit le commutateur *I*_{*sel*2} pour une valeur *i* impaire ;
- si la cellule est la cellule c*ⱼ* du module *Mᵢ* pour une valeur *j* paire :
∘ soit les commutateurs *I*_{*pol*2} et *I*_{*pol*3} pour une valeur *i* paire ;
∘ soit les commutateurs *I*_{*pol*1} et *I*_{*pol*4} pour une valeur *i* impaire ;
- si la cellule est la cellule c*ⱼ* du module *Mᵢ* pour une valeur *j* impaire :
∘ soit les commutateurs *I*_{*pol*1} et *I*_{*pol*4} pour une valeur *i* paire ;
∘ soit les commutateurs *I*_{*pol*2} et *I*_{*pol*3} pour une valeur *i* impaire ;
et configuré de manière à établir le reste des commutateurs comme étant ouverts.

2. Système selon la revendication 1, comprenant en outre un voltmètre (MV), dont l'une des bornes est en connexion électrique avec la ligne *l*_{*sel*1} et l'autre borne est en connexion électrique avec la ligne *l*_{*sel*2}.

3. Procédé de gestion pour gérer un équilibre de niveau de charge dans un processus de charge destiné à charger un système selon la revendication 2, comprenant les étapes:
- surveiller la charge de chacun des modules dans une batterie (B) d'un système de gestion selon la revendication 2 ;
- lorsqu'un module spécifique *Mᵢ* atteint une valeur préétablie correspondant à la pleine charge de sa capacité alors que le reste des modules de la batterie (B) n'a pas encore atteint la pleine charge, les commutateurs d'entrée, de sortie, inverseur, et de dérivation du module *Mᵢ* qui a atteint la pleine charge sont configurés avec une polarité inverse jusqu'à ce que la charge du module *Mᵢ* soit compensée avec le niveau de charge du reste des modules.

4. Procédé de gestion pour gérer un équilibre de niveau de charge dans un processus de décharge destiné à décharger un système selon la revendication 2, comprenant les étapes:
- surveiller la charge de chacun des modules dans une batterie (B) d'un système de gestion selon la revendication 2 ;
- lorsqu'un module spécifique *Mᵢ* atteint une valeur préétablie correspondant au niveau de décharge alors que le reste des modules de la batterie (B) n'a pas encore atteint le niveau de décharge, les commutateurs d'entrée, de sortie, inverseur, et de dérivation du module *Mᵢ* qui a atteint la pleine charge sont configurés avec une polarité inverse jusqu'à ce que la charge du module *Mᵢ* soit compensée avec le niveau de charge du reste des modules.

5. Procédé de gestion pour gérer un équilibre de niveau de charge d'un système selon la revendication 2, le procédé comprenant les étapes:
- surveiller la charge des cellules *cⱼ*, où *j* présente des valeurs comprises entre 1 et *n*, d'un module *Mᵢ*, dans lequel l'étape de surveillance comprend les étapes:
o pour chaque cellule *cⱼ*, où *j* présente des valeurs comprises entre 1 et *n*
▪ configurer le système dans le mode de sélection pour sélectionner la cellule *cⱼ* du module *Mᵢ* ;
▪ fournir la valeur de mesure obtenue dans le voltmètre (MV) ;
- déterminer s'il est nécessaire d'établir une configuration de circuit pour un équilibre entre une cellule spécifique *cⱼ* et le reste des cellules de son module *Mᵢ* ;
- en réponse à une commande visant à établir une configuration de circuit pour équilibrer la cellule *cⱼ* du module *Mᵢ*, où *i* est une valeur paire, configurer le système dans le mode de sélection pour sélectionner la cellule *cⱼ* et fermer les commutateurs suivants du dispositif indirect bidirectionnel modifié :
o les commutateurs *If*₁ et *If*₄ si la valeur *j* est paire ;
o les commutateurs *I*_{*f*2} et *I_{f3}* si la valeur *j* est impaire ;
- en réponse à une commande visant à établir une configuration de circuit pour équilibrer la cellule *cⱼ* du module *Mᵢ*, où *i* est une valeur impaire, configurer le système dans le mode de sélection pour sélectionner la cellule *cⱼ* et fermer les commutateurs suivants du dispositif indirect bidirectionnel modifié :
∘ les commutateurs *I*_{*f*2} et *I*_{*f*3} si la valeur *j* est paire ;
∘ les commutateurs *I*_{*f*1} et *I*_{*f*4} si la valeur *j* est impaire.

6. Procédé selon la revendication 5, dans lequel l'étape consistant à déterminer s'il est nécessaire d'établir une configuration de circuit pour équilibrer une cellule *cⱼ* et le reste des cellules du même module consiste à vérifier si la valeur de tension de la cellule *cⱼ* est inférieure à une valeur *t* = *p* □ *v̅, p* étant un facteur compris entre une valeur minimale préétablie et une valeur maximale préétablie , et *v̅* étant la valeur moyenne de la tension mesurée dans toutes les cellules dudit module *Mᵢ.*

7. Procédé selon la revendication 6, dans lequel la valeur minimale préétablie est égale à 0,3 et la valeur maximale préétablie est égale à 0,5.

8. Procédé selon la revendication 5, dans lequel l'étape consistant à déterminer s'il est nécessaire d'établir une configuration de circuit pour équilibrer une cellule *cⱼ* et le reste des cellules du même module consiste à vérifier si la valeur de tension de la cellule *cⱼ* est supérieure à une valeur *s* = *q* □ *v̅, q* étant un facteur compris entre une valeur minimale préétablie et une valeur maximale préétablie , et *v̅* étant la valeur moyenne de la tension mesurée dans toutes les cellules dudit module *Mᵢ.*

9. Procédé selon la revendication 8, dans lequel la valeur minimale préétablie est égale à 0,7 et la valeur maximale préétablie est égale à 0,9.
